# EUROPÄISCHE PATENTSCHRIFT

(11) **EP 2 001 777 B1**
(45) Veröffentlichungstag und Bekanntmachung des Hinweises auf die Patenterteilung: **07.10.2009**
(21) Anmeldenummer: 07711954.3
(22) Anmeldetag: 15.03.2007
(51) Int. Cl.: B65G 47/91

(54) **UNTERDRUCKHANDHABUNGSEINRICHTUNG**
VACUUM HANDLING DEVICE
DISPOSITIF DE MANUTENTION À DÉPRESSION

(30) Priorität: 31.03.2006 DE 102006016235; 31.03.2006 DE 102006016236; 16.05.2006 DE 102006023886; 16.05.2006 DE 102006023885
(43) Veröffentlichungstag der Anmeldung: 17.12.2008
(73) Patentinhaber: J. Schmalz GmbH, 72293 Glatten (DE)
(72) Erfinder: SCHAAF, Walter, 72250 Freudenstadt-Grüntal (DE); EISELE, Thomas, 78737 Fluorn-Winzeln (DE)
(74) Vertreter: Steimle, Josef
(86) Internationale Anmeldenummer: PCT/EP2007/002275
(87) Internationale Veröffentlichungsnummer: WO 2007/115633

(56) Entgegenhaltungen:
- DE-A1- 19 817 426
- DE-A1-102005 047 385

## Beschreibung

Die Erfindung betrifft eine Unterdruckhandhabungseinrichtung mit mehreren Bauteilen, wenigstens eines der Bauteile mit einem Datenspeicher ausgestattet ist.

Mit Unterdruckhandhabungseinrichtungen werden mitunter beträchtliche Lasten manipuliert, d.h. angehoben, an einen anderen Ort bewegt und dort wieder abgesetzt, oder es werden Werkstücke für eine Bearbeitung festgehalten bzw. gespannt. Die Unterdruckhandhabungseinrichtungen bestehen aus einer Vielzahl von Bauteilen, die aufeinander abgestimmt sein müssen, so dass die Unterdruckhandhabungseinrichtungen ihre Aufgaben prozesssicher erfüllen können. Insbesondere bei Bauteilen, die längere Zeit in Gebrauch sind und einem Verschleiß unterliegen, ist dies nicht immer gewährleistet. Außerdem ist bei nachgeahmten Bauteilen von ungenügender Qualität nicht gewährleistet, dass diese alle Spezifikationen der Unterdruckhandhabungseinrichtung erfüllen.

Aus der DE 198 17 426 B4 ist ein Greifersystem bekannt, das aus mehreren Greifern aufgebaut ist. Dabei ist jeder Greifer mit einer zentralen Rechen- und Datenspeichereinheit verbunden, mit der der Greifer kommuniziert. Diese Rechen- und Datenspeichereinheit steuert jeden Greifer an und bewirkt den Bewegungsablauf des Greifersystems. Dabei weist jeder Greifer einen eigenen Mikrokontroller für Rechenaufgaben und einen Datenspeicher auf. Auf diese Weise kann jeder Greifer Rechenaufgaben durchführen, z.B. durch Messung des Unterdrucks, ob der Greifer korrekt am Werkstück anliegt. Abhängig hiervon können z.B. andere Saugelemente angesteuert werden. Es ist jedoch nicht gewährleistet, ob ein mit den jeweiligen Greifern bestücktes Greifersystem das Werkstück prozesssicher handhabt. Der Erfindung liegt daher die Aufgabe zugrunde, Unterdruckhandhabungseinrichtungen bereit zu stellen, die prozesssicher sind.

Diese Aufgabe wird mit einer Unterdruckhandhabungseinrichtung gelöst, die die Merkmale des Anspruchs 1 aufweist.

Um sicher zu stellen, dass nur funktionstüchtige und geeignete Bauteile verwendet und miteinander kombiniert werden, ist mindestens ein Bauteil, in der Regel das wichtigste oder anfälligste Bauteil, mit einem Datenspeicher, insbesondere mit einem RFID (Radio Frequency Identification Device) versehen.

Insbesondere können Bauteile der Vakuumtechnik, z.B. Sauger, oder Bauteile aus dem Bereich der Vakuumkomponenten, z.B. Blocksauger, mit einem RFID für Kopierschutz und um weitergehende Funktionen sicherzustellen, ausgestattet sein.

Die RFID des Bauteils oder der Bauteile können vor der Verwendung des Bauteils automatisch oder visuell bzw. manuell ausgelesen werden, um festzustellen, ob die Bauteile in das System passen oder um festzustellen, ob es Originalbauteile sind oder nicht. Außerdem kann die Unterdruckhandhabungseinrichtung so ausgelegt sein, dass sie nur dann betriebsfähig ist, wenn Bauteile mit einem RFID eingesetzt oder eingebaut sind. Dabei können einzelne oder alle Komponenten eines Vakuumsystems mit RFID ausgestattet werden.

Derartige Komponenten und Bauteile sind: Sauggreifer (Saugnäpfe, Saugplatten, Blocksauger), Vakuumerzeuger (Ejektoren, Gebläse, Vakuumpumpen), Ventile, Schläuche, Greifersteuerungen, insbesondere Verschleißteile und die Maschine sowie die Maschinensteuerung.

Die RFID sind entweder integriert oder nachträglich angebracht, und insbesondere unsichtbar und unlösbar mit dem Bauteil verbunden, z.B. eingegossen. Das RFID kann nur durch Zerstörung des Bauteils entfernt oder angebracht werden.

Die Komponenten kommunizieren über RFID mit einer Greifersteuerung und/oder einer Maschinensteuerung. Dabei werden Zustandsdaten des Bauteils sowohl an die Steuerung als auch von der Steuerung an das Bauteil bzw. den RFID übermittelt.

Die Greifersteuerung bzw. Maschinensteuerung steuert bzw. optimiert den Prozess auf Basis eines in der Steuerung abgelegten Prozessmodells und der übermittelten Daten.

Es wird z.B. die Beschleunigung und/oder Geschwindigkeit auf die Fähigkeiten des Sauggreifers angepasst bzw. optimiert. So kann festgestellt werden, ob der Sauggreifer z.B. eine hohe Haltekraft erzeugen kann, so dass eine hohe Geschwindigkeit gefahren werden kann. Bei einer niedrigen Haltekraft reduziert die Steuerung die Geschwindigkeit.

Die zu optimierenden Prozesse können Handhabungsprozesse (Saugdruck, Beschleunigung, Geschwindigkeit) und Bearbeitungsprozesse, z.B. bei Blech- oder Holzbearbeitungsmaschinen, sein.

Die im RFID abgespeicherten Daten sind: Komponenten-Stammdaten (Identnummer bzw. Artikelnummer, Material, Farbe), Herstellungsdaten (Herstelldatum, Prüfdaten), Zustandsdaten (Datum, Ersteinsatz bzw. Inbetriebnahmedatum, Zykluszahl).

Für Zustandsdaten und RFID wird auch auf die DE 10 2005 047 385 A1 verwiesen.

Auch das Objekt oder Werkstück kann mit einem RFID ausgestattet sein und für die Vakuumtechnik wichtige Parameter liefern, wie Porosität, Gewicht, Dichte, Abmessungen, Oberflächenrauheit, Material.

So kann z.B. die maximale Nutzungsdauer oder Zykluszahl eines Saugers eingehalten werden. Kurz vor der ersten Inbetriebnahme wird auf das RFID im Sauger das Inbetriebnahmedatum geschrieben. In der Maschinensteuerung wird hinterlegt (eventuell unter Berücksichtigung der Zykluszahl und des erfahrungsgemäßen Verschleißes), an welchem Datum der Sauger kontrolliert bzw. ausgetauscht werden soll. Die Maschinensteuerung prüft dieses Inbetriebnahmedatum zyklisch, z.B. täglich.

Ein Anwendungsbeispiel für angepasste Greifparameter ergibt sich dadurch, dass auf dem RFID eines Saugergreifers Einsatz-und Materialparameter gespeichert sind, z.B. optimales Vakuumniveau, max. übertragbare Reibkraft bei geölten oder trockenen Bauteilen. Greifer- bzw. Maschinensteuerung liest diese aus und passt den Handhabungsprozess entsprechend an.

Ein Anwendungsbeispiel für Identifikation und Rückverfolgung von Saugern ergibt sich dadurch, dass auf dem RFID des Saugers Herstelldatum, Artikelnummer usw. gespeichert sind. Bei einem Rücklauf des Bauteils zum Hersteller, z.B. in einem Reklamationsfall, kann genau auf Alter und/oder Produktionsrandbedingungen zu dieser Zeit geschlossen werden, das diese Daten im RFID abgespeichert sind und ausgelesen werden.

Ein Anwendungsbeispiel für die Sicherstellung prozessoptimaler Funktionen ergibt sich dadurch, dass in einem Vakuumsystem Sauggreifer bzw. Blocksauger mit Ventilen, Vakummerzeugern usw. zusammenarbeiten. Der Systemlieferant ist für die optimale Funktion dieser Bauteile verantwortlich. Damit Verwechslungen von Systemelementen erkannt werden, werden Elemente per RFID identifiziert und in der Steuerung quasi freigegeben. Verwechslungen, die z.B. dadurch möglich sind, dass Sauger äußerlich gleich aussehen können aber z.B. aus einem anderen Material bestehen, sind dadurch ausgeschlossen. Diese Erkennung umfasst alle Komponenten eines Vakuumsystems.

Ein Anwendungsbeispiel für die Vorschub- und Drehzahloptimierung bei Holzbearbeitungsmaschinen ergibt sich dadurch, dass die Maschinensteuerung erkennt, welche und wie viele Blocksauger die Holzplatte festhalten. In der Maschinensteuerung ist hinterlegt, welche Zerspanungsparameter welche resultierende Kraft auf die zu bearbeitende Holzplatte ausübt (Prozessmodell). Die Zerspanungsparameter werden von der Maschinensteuerung automatisch so angepasst, dass die Bearbeitung unter Berücksichtigung der maximal zulässigen Bearbeitungskraft, gegebenenfalls mit Sicherheitsfaktor, möglichst schnell erfolgt, wodurch z.B. ein maximales Zerspanvolumen erzielt wird.

Ein Anwendungsbeispiel für werkstückoptimale Prozessparameter ergibt sich dadurch, dass das Objekt oder Werkstück mit einem RFID ausgestattet ist, welcher Daten zur Porosität, Gewicht, Dichte, Abmessungen, Oberflächenrauheit, Material enthält. Aus diesen Daten werden dann prozessoptimale Parameter zur Vakuumhandhabung oder Bearbeitung berechnet.

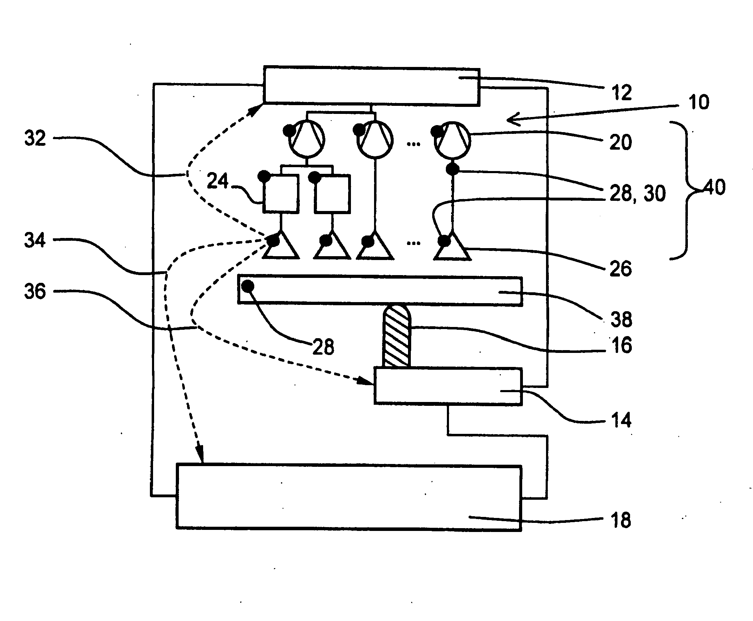

Weitere Vorteile, Merkmale und Einzelheiten der Erfindung ergeben sich aus den Unteransprüchen und der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in den Ansprüchen und in der Beschreibung erwähnten Merkmale jeweils einzeln für sich oder in beliebiger Kombination erfindungswesentlich sein.

Die Zeichnung zeigt eine Unterdruckhandhabungseinrichtung 10 mit einer Greifersteuerung 12, die mit einer Prozesssteuerung 14 eines Werkzeugs 16 verbunden ist. Außerdem ist die Greifersteuerung 12 mit einer Maschinen- oder Robotersteuerung 18 verbunden. Die Unterdruckhandhabungseinrichtung 10 besitzt eine Vielzahl an Bauteilen 40, wie Vakuumerzeuger 20 (Ejektoren), Schlauchverbindungen 22, Ventile 24, Sauggreifer 26 (oder Saugplatten, Blocksauger, Dichtungen). Diese Bauteile sind jeweils mit einem Datenspeicher 28 bestückt, der z.B. ein RFID 30 ist. Dieses RFID kommuniziert, was mit gestrichelten Linien 32 bis 35 dargestellt ist, mit den Steuerungen 12, 14 und 18. Dabei werden Daten vom RFID 30 zu den Steuerungen 12, 14 ,und 18 und/oder zurück übertragen.

Gegebenenfalls kann auch das Werkstück 38 mit einem Datenspeicher 28 ausgestattet sein, so dass der Bearbeitungsprozess optimal an das Werkstück anpassbar ist. In diesen Datenspeicher können z.B. kurz vor der Bearbeitung Daten abgelegt werden, die nicht nur das Bauteil charakterisieren, sondern auch den Zustand des Bauteils, z.B. die Oberflächenbeschaffenheit, wie staubig, ölig, trocken usw. Es kann z.B. auch die Temperatur des Bauteils abgespeichert werden. Diese Daten werden unmittelbar vor der Bearbeitung des Werkstücks 38 ausgelesen und die Steuerungen 12, 14 und 18 und die oder einige der Bauteile 40 entsprechend angesteuert, so dass optimale Bearbeitungsergebnisse erzielt werden.

## Patentansprüche

1. Unterdruckhandhabungseinrichtung (10) bestehend aus mehreren Bauteilen (40), wobei wenigstens eines der Bauteile (40) mit einem Datenspeicher (28) ausgestattet ist, wobei der Datenspeicher (28) Stammdaten des Bauteils (40) enthält und der Datenspeicher (28) von einer Steuerung (12) der Unterdruckhandhabungseinrichtung (10), einer Maschinensteuerung (18) und/oder einer Prozesssteuerung (14) auslesbar ist, und der Prozess auf Basis eines in der Steuerung abgelegten Prozessmodells und der übermittelten Daten gesteuert bzw. optimiert wird, **dadurch gekennzeichnet, dass** der Datenspeicher (28) ein RFID (30) ist.

2. Unterdruckhandhabungseinrichtung nach Anspruch 1, **dadurch gekennzeichnet, dass** der Datenspeicher (28) beschreibbar ist.

3. Unterdruckhandhabungseinrichtung nach einem der vorhergehenden Ansprüche, **dadurch gekennzeichnet, dass** der Datenspeicher (28) Zustandsdaten des Bauteils enthält und/oder Prozessdaten enthält und/oder erhält.

4. Unterdruckhandhabungseinrichtung nach einem der vorhergehenden Ansprüche, **dadurch gekennzeichnet, dass** der Datenspeicher (28) mit der Steuerung (12, 14 und/oder 18), insbesondere bidirektional kommuniziert.

5. Unterdruckhandhabungseinrichtung nach einem der vorhergehenden Ansprüche, **dadurch gekennzeichnet, dass** der Datenspeicher (28) unsichtbar im oder am Bauteil (40) angeordnet ist.

6. Unterdruckhandhabungseinrichtung nach einem der vorhergehenden Ansprüche, **dadurch gekennzeichnet, dass** der Datenspeicher (28) in das Bauteil (40) integriert, insbesondere eingegossen ist.

7. Unterdruckhandhabungseinrichtung nach einem der vorhergehenden Ansprüche, **dadurch gekennzeichnet, dass** im Datenspeicher (28) ein Code enthalten ist.

8. Unterdruckhandhabungseinrichtung nach einem der vorhergehenden Ansprüche, **dadurch gekennzeichnet, dass** das Werkstück (38) einen Datenspeicher (28) aufweist.

9. Unterdruckhandhabungseinrichtung nach einem der vorhergehenden Ansprüche, **dadurch gekennzeichnet, dass** das Bauteil (40) ein Sauger, insbesondere ein Sauggreifer, eine Saugplatte, ein Blocksauger, oder ein Vakuumerzeuger, insbesondre ein Ejektor, ein Gebläse, eine Vakuumpumpe, oder ein Ventil, ein Sensor, Schläuche, Leitungen, Verbindungselemente für Greiferkomponenten, ein Dichtelement oder ein Verschleißelement ist.

## Claims

1. Vacuum handling device (10) comprising several components (40) wherein at least one of said components (40) is equipped with a data memory (28), wherein said data memory (28) contains the master data of the component (40) and said data memory (28) can be read out by a control element (12) of the vacuum handling device (10), a machine control element (18) and/or a process control element (14) and wherein the process is controlled and/or optimised based on a process model stored in the control element and the transferred data, **characterized in that** the said data memory (28) is a RFID (30).

2. Vacuum handling device according to claim 1, **characterized in that** said data memory (28) is recordable.

3. Vacuum handling device according to one of the preceding claims, **characterized in that** said data memory (28) contains status data of the component contains and/or contains and/or receives process data.

4. Vacuum handling device according to one of the preceding claims, **characterized in that** the data memory (28) communicates with the control (12, 14 and/or 18), in particular in bidirectional direction.

5. Vacuum handling device according to one of the preceding claims, **characterized in that** the data memory (28) is arranged invisible in or at the component (40).

6. Vacuum handling device according to one of the preceding claims, **characterized in that** the data memories (28) is integrated into the component (40), in particular cast in.

7. Vacuum handling device according to one of the preceding claims, **characterized in that** the data memory (28) contains a code.

8. Vacuum handling device according to one of the preceding claims, **characterized in that** the workpiece (38) contains a data memory (28).

9. Vacuum handling device according to one of the preceding claims, **characterized in that** the component (40) is a suction device, in particular a suction gripper, a suction plate, a suction block, or a vacuum generator, in particular an ejector, a blower, a vacuum pump, or a valve, a sensor, hoses, lines, connecting elements for gripping components, a sealing element or a wear element.

## Revendications

1. Dispositif de manutention à dépression (10), formé par plusieurs pièces (40), au moins l'une des pièces (40) étant équipée d'une mémoire de données (28), ladite mémoire de données (28) contenant des données de base de la pièce (40) et ladite mémoire de données (28) pouvant être lue par une commande (12) du dispositif de manutention à dépression (10), une commande de machine (18) et/ou un commande de processus (14), et le processus est commandé et optimisé sur la base d'un modèle de processus, stocké dans la commande, et des données transmises, **caractérisé en ce que** la mémoire de données (28) est une mémoire d'identification par radiofréquence RFID (30).

2. Dispositif de manutention à dépression selon la revendication 1, **caractérisé en ce que** la mémoire de données (28) est une mémoire inscriptible.

3. Dispositif de manutention à dépression selon l'une quelconque des revendications précédentes, **caractérisé en ce que** la mémoire de données (28) contient des données d'état de la pièce et/ou contient et/ou reçoit des données du processus.

4. Dispositif de manutention à dépression selon l'une quelconque des revendications précédentes, **caractérisé en ce que** la mémoire de données (28) communique, en particulier de manière bidirectionnelle, avec la commande (12, 14 et/ou 18).

5. Dispositif de manutention à dépression selon l'une quelconque des revendications précédentes, **caractérisé en ce que** la mémoire de données (28) est agencée de manière non visible dans ou sur la pièce (40).

6. Dispositif de manutention à dépression selon l'une quelconque des revendications précédentes, **caractérisé en ce que** la mémoire de données (28) est intégrée, en particulier coulée, dans la pièce (40).

7. Dispositif de manutention à dépression selon l'une quelconque des revendications précédentes, **caractérisé en ce qu'**un code est contenu dans la mémoire de données (28).

8. Dispositif de manutention à dépression selon l'une quelconque des revendications précédentes, **caractérisé en ce que** la pièce à manipuler (38) comporte une mémoire de données (28).

9. Dispositif de manutention à dépression selon l'une quelconque des revendications précédentes, **caractérisé en ce que** la pièce (40) est un dispositif à succion, en particulier une griffe à succion, une plaque à succion, un élément aspirant en forme de bloc, ou un générateur de vide, en particulier un éjecteur, une soufflerie, une pompe à vide, ou une vanne, un capteur, des tuyaux, des conduites, des éléments de liaison pour les composants d'une griffe, un élément d'étanchéité ou un élément d'usure.
